# EUROPÄISCHE PATENTSCHRIFT

(11) **EP 2 850 387 B1**
(45) Veröffentlichungstag und Bekanntmachung des Hinweises auf die Patenterteilung: **06.06.2018**
(21) Anmeldenummer: 13709930.5
(22) Anmeldetag: 19.03.2013
(51) Int. Cl.: G01C 3/08, G01C 25/00, G01S 7/497, G01S 17/10

(54) **OPTISCHES ENTFERNUNGSMESSGERÄT MIT KALIBRIEREINRICHTUNG ZUM BERÜCKSICHTIGEN VON ÜBERSPRECHEN**
OPTICAL DISTANCE MEASUREMENT DEVICE WITH CALIBRATION DEVICE TO TAKE CROSS-TALK INTO ACCOUNT
APPAREIL DE MESURE DE L'ÉLOIGNEMENT OPTIQUE COMPRENANT UN DISPOSITIF D'ÉTALONNAGE POUR LA PRISE EN CONSIDÉRATION DE LA DIAPHONIE

(30) Priorität: 18.05.2012 DE 102012208308
(43) Veröffentlichungstag der Anmeldung: 25.03.2015
(73) Patentinhaber: Robert Bosch GmbH, 70442 Stuttgart (DE)
(72) Erfinder: EISELE, Andreas, 70771 Leinfelden-Echterdingen (DE); SCHMIDTKE, Bernd, 71229 Leonberg (DE)
(86) Internationale Anmeldenummer: PCT/EP2013/055621
(87) Internationale Veröffentlichungsnummer: WO 2013/170982

(56) Entgegenhaltungen:
- EP-A1- 2 450 722
- DE-A1- 10 130 763
- DE-A1- 10 159 932
- DE-A1-102009 045 323
- US-A1- 2011 121 182

## Beschreibung

### Stand der Technik

Es sind optische Entfernungsmessgeräte bekannt, die einen Abstand zwischen dem Entfernungsmessgerät und einem Zielobjekt ermitteln können. Hierzu senden die Entfernungsmessgeräte einen Lichtstrahl in Richtung des Zielobjekts aus und detektieren vom Objekt reflektiertes und in Richtung Entfernungsmessgerät zurücklaufendes Licht.

Die Ermittlung der Entfernung kann mittels eines Laufzeitverfahrens, auch als time-of-flight-Verfahren bezeichnet, geschehen. Die Messung kann dabei im Zeitbereich oder im Frequenzbereich stattfinden. Bei einer zeitlichen Messung kann z.B. ein kurzer Laserpuls zu einem Zeitpunkt tₛₜₐᵣₜ zum Zielobjekt ausgesandt und dort gestreut bzw. reflektiert werden. Ein Teil dieser Messstrahlung gelangt z.B. über eine Empfangsoptik zum optischen Empfänger und erreicht diesen zu einem Zeitpunkt tₛₜₒₚ. Aus der gemessenen Laufzeit (tₛₜₒₚ minus tstart) und der Lichtgeschwindigkeit c₀ wird die Entfernung d des Zielobjekts berechnet.

Bei einer Messung im Frequenzbereich bzw. nach dem Phasenlaufzeitverfahren kann die optische Strahlung einer Lichtquelle in ihrer Intensität beispielsweise sinusförmig moduliert werden. Diese modulierte Strahlung wird auf das Zielobjekt ausgesandt und dort gestreut bzw. reflektiert. Ein Teil der reflektierten Strahlung gelangt z.B. über eine Empfangsoptik zu einem optischen Empfänger. In Abhängigkeit von einer Entfernung des Zielobjekts weist die empfangene sinusförmig intensitätsmodulierte Strahlung einen Phasenversatz zum ausgesendeten sinusförmig intensitätsmodulierten Signal auf. Aus der Phasendifferenz zwischen empfangenem und gesendetem Signal, der bekannten Modulationsfrequenz sowie der Lichtgeschwindigkeit kann die Entfernung zum Zielobjekt berechnet werden. Alternativ zur beispielhaft genannten sinusförmigen Intensitätsmodulation können Rechteckpulse und andere Modulationsformen gewählt werden. Mehrdeutigkeiten in der Zuordnung einer Entfernung zu einer Phase können durch Messungen bei mehreren eng benachbarten Frequenzen aufgelöst werden. Die Messgenauigkeit der oben beschriebenen Entfernungsmessgeräte ist allerdings nicht immer zufriedenstellend. Es sind bereits Messvorrichtungen und Verfahren vorgeschlagen worden, die es ermöglichen, die Messgenauigkeit und Zuverlässigkeit einer Entfernungsmessung zu verbessern, beispielsweise in DE10130763A1, EP2450722A1,

DE102009045323A1, US2011/0121182A1 sowie DE10159932A1.

Es kann daher ein Bedarf an einer Messvorrichtung und einem Verfahren bestehen, die es ermöglichen, die Messgenauigkeit und Zuverlässigkeit einer Entfernungsmessung zu verbessern.

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Im Folgenden werden Merkmale, Einzelheiten und mögliche Vorteile einer Vorrichtung gemäß Ausführungsformen der Erfindung im Detail diskutiert. Gemäß einem ersten Aspekt der Erfindung wird eine Messvorrichtung zur optischen Entfernungsmessung vorgestellt. Die Messvorrichtung weist eine Sendeeinrichtung, eine Modulatoreinrichtung, eine Empfangseinrichtung, eine Auswerteeinrichtung und eine Kalibriereinrichtung auf. Die Sendeeinrichtung ist ausgeführt, ein erstes Signal auf ein Objekt hin auszusenden. Die Modulatoreinrichtung ist ausgeführt, das erste Signal beispielsweise periodisch in Intensität, Amplitude und/oder in der Frequenz zu modulieren. Die Empfangseinrichtung ist dabei ausgeführt, ein zweites Signal zu detektieren und beispielsweise an die Auswerteeinrichtung weiterzuleiten. Die Auswerteeinrichtung ist eingerichtet, das zweite Signal zu empfangen und auszuwerten. Beispielsweise kann die Auswerteeinrichtung eingerichtet sein, die Entfernung der Messvorrichtung vom Objekt aus der Phasendifferenz zwischen erstem und dem zweiten Signal, der bekannten Modulationsfrequenz und der Lichtgeschwindigkeit zu ermitteln. Die Kalibriereinrichtung ist ausgeführt, die Messvorrichtung zu kalibrieren, während die Modulatoreinrichtung eingeschaltet ist und während die Sendeeinrichtung unterhalb eines vorgebbaren Leistungsschwellenwerts betrieben wird. D.h. die Kalibrierung findet statt während die Modulatoreinrichtung z.B. mit voller Leistung betrieben wird und die Sendeeinrichtung z.B. mit sehr niedriger Leistung betrieben wird bzw. ausgeschaltet ist. Dabei bezieht sich der Leistungsschwellenwert auf die optische Ausgangsleistung, insbesondere auf die mittlere optische Ausgangsleistung, die von der Sendeeinrichtung abgestrahlt wird.

Das zweite Signal ist dabei, das von der Empfangseinrichtung empfangene Signal. Bei einer Kalibrierungsmessung kann das zweite Signal lediglich optische Hintergrundstrahlung aufweisen. Bei einer Entfernungsmessung dagegen kann das zweite Signal sowohl Hintergrundstrahlung als auch vom Objekt zurücklaufende Messstrahlung aufweisen.

Anders ausgedrückt basiert die Idee der vorliegenden Erfindung auf der Erkenntnis, dass ein Übersprechen, auch als crosstalk bezeichnet, zwischen der Modulatoreinrichtung und der Empfangseinrichtung bzw. zwischen einem Sende- und einem Empfangspfad stattfindet und dies zu einem systematischen Entfernungsmessfehler führen kann. Einerseits kann das Übersprechen bewirken, dass sich die Versorgungsspannung und die Empfindlichkeit der Empfangsvorrichtung ändern. Andererseits kann sich durch das Übersprechen eine Breite von Abtastfenstern zum Detektieren des zweiten Signals durch die Empfangseinrichtung ändern, da die elektrischen Signale des Öffnens und Schließens von Abtastfenstern beeinflusst werden.

Insbesondere bei der Ausführung der Empfangseinrichtung mit SPADs (Single Photon Avalanche Dioden), bei der die Modulatoreinrichtung, die Empfangseinrichtung und die Auswerteeinrichtung in einem Chip integriert sein können, kann sich Einerseits ein Übersprechen zwischen Modulatoreinrichtung und Empfangseinrichtung ergeben, welches z.B. die Versorgungsspannung der SPADs beeinflusst. Andererseits kann sich ein Übersprechen zwischen Modulatoreinrichtung und Auswerteeinrichtung ergeben, das sich auf die Breite von Abtastfenstern bzw. Bins auswirkt.

Beim Kalibrieren der erfindungsgemäßen Messvorrichtung durch die Kalibriereinrichtung wird dieses Übersprechen berücksichtigt. Die Kalibrierung findet hierzu bei eingeschalteter Modulatoreinrichtung statt. Gleichzeitig wird die Sendeeinrichtung während der Kalibrierung unterhalb eines vorgegebenen Leistungsschwellenwerts betrieben. Beispielsweise kann die Sendeeinrichtung als Laser bzw. Laserdiode ausgeführt sein und während der Kalibrierung unterhalb der Laserschwelle betrieben werden, so dass keine Messstrahlung bzw. vernachlässigbar wenig Messstrahlung zum Zielobjekt emittiert wird oder der Laser mit extrem geringer Effizienz arbeitet. Auf diese Weise kann beispielsweise auf einen mechanischen Shutter im Strahlengang verzichtet werden, der die Abmessungen der Messvorrichtung unnötig vergrößern würde. Insbesondere bei handgehaltenen Entfernungsvorrichtungen kann es vorteilhaft sein, durch den Verzicht auf eine mechanische Schließvorrichtung das Gewicht zu verringern.

Auf diese Weise liegt durch Betreiben der Modulatoreinrichtung das elektrische Übersprechen zwischen Sende- und Empfangspfad bereits während der Kalibrierung in vollem Umfang vor, ohne dass vom Zielobjekt reflektierte Strahlung detektiert wird. Auf diese Weise kann einfach und effizient ein systematischer Messfehler ermittelt und bei der nachfolgenden Entfernungsmessung berücksichtigt werden.

Die Messvorrichtung kann eine handgehaltene oder stationär installierte Entfernungsmessvorrichtung sein. Die Sendeeinrichtung kann eine Quelle für optische Strahlung wie z.B. eine Laserdiode, insbesondere eine rote Laserdiode sein. Die Sendeeinrichtung kann auch als Emitter bezeichnet werden. Die Sendeeinrichtung ist ausgeführt, ein erstes Signal auf ein Objekt hin gerichtet auszusenden. Das Objekt kann auch als Zielobjekt bezeichnet werden. Das erste Signal kann auch als Messstrahlung bzw. Signallicht bezeichnet werden. Beispielsweise kann das erste Signal eine Wellenlänge von 635 bzw. 650 nm aufweisen. Dabei kann die Sendeeinrichtung bei einer Entfernungsmessung mit einem Gleichstrom (DC-Strom) von z.B. ca. 30mA versorgt werden. Bei einer Kalibrierungsmessung kann dieser Strom unter einem vorgegebenen Grenzwert von z.B. 20mA, vorzugsweise 10mA und insbesondere 5mA liegen.

Die Modulatoreinrichtung kann auch als on-chip-Lasermodulator bezeichnet werden und kann z.B. einen Oszillator aufweisen. Die Modulatoreinrichtung ist dabei ausgeführt, das erste Signal in Intensität, Amplitude und/oder Frequenz zu variieren. Beispielsweise kann die Modulatoreinrichtung das erste Signal periodisch, z.B. sinusförmig modulieren. Dies kann beispielsweise mit einer Modulation des Laserdiodenstroms mit einer AC-Amplitude von 5 mA bei einem DC-Laserdiodenstrom von beispielsweise 30mA erfolgen.

Die Empfangseinrichtung kann ein Detektor sein, der z.B. mindestens eine Lawinenfotodiode, auch als Avalanche-Photo-Diode (APD) bezeichnet, oder mindestens eine Single Photo Avalanche Diode (SPAD) aufweist. Die Empfangseinrichtung ist ausgeführt, ein zweites Signal zu detektieren. Das zweite Signal kann dabei z.B. bei einer Entfernungsmessung sowohl vom Zielobjekt reflektierte bzw. zurückgeworfene Messstrahlung als auch Hintergrundstrahlung aufweisen. Bei einer Kalibrierungsmessung kann das zweite Signal lediglich Hintergrundstrahlung umfassen. Das zweite Signal wird an die Auswerteeinrichtung übermittelt, in der beispielsweise mittels eines Algorithmus die Entfernung der Messvorrichtung zum Zielobjekt ermittelt werden kann.

Die Auswerteeinrichtung kann z.B. eine Steuereinheit sein. Insbesondere kann die Auswerteeinrichtung als Application Specific Integrated Circuit, auch als ASIC bezeichnet, ausgeführt sein. Dabei kann die Auswerteeinrichtung z.B. die Zeitmessung und/oder die Modulation des ersten Signals und/oder die Modulation der Empfangseinrichtung steuern. Insbesondere kann die Auswerteeinrichtung, im Falle der Ausführung der Empfangsvorrichtung als SPAD, von der Empfangseinrichtung empfangene digitale Signale verschiedenen Zählern zuordnen. Die Zähler bzw. Zählerstände repräsentieren dabei unterschiedliche Detektionsperioden. Diese Detektionsperioden können als Bin-Breiten oder Abtastfenster bezeichnet werden. Bei einer Entfernungsmessung sollte die Summe der Detektionsperioden der Periode des modulierten ersten Signals entsprechen. Anders ausgedrückt wird während einer Detektionsperiode ein sich periodisch wiederholender Phasenbereich des periodisch modulierten Detektionssignals erfasst und die entsprechenden digitalen Detektionssignale in Zählern akkumuliert. Aus den über viele Detektionsperioden akkumulierten Zählergebnissen der digitalen Zähler kann auf einen Phasenunterschied zwischen dem ausgesendeten ersten Signal und dem empfangenen zweiten Signal geschlossen werden und daraus die Entfernung des Zielobjekts ermittelt werden.

Die Kalibriereinrichtung kann als separate Einheit der Messvorrichtung oder z.B. als Teil der Auswerteeinrichtung ausgeführt sein. Die Kalibriereinrichtung ist ausgeführt, die Messvorrichtung zu kalibrieren. Hierzu ist die Kalibriereinrichtung dazu ausgeführt, die Modulatoreinrichtung anzusteuern, eine Modulation der Sendeeinrichtung einzuleiten und gleichzeitig die DC-Versorgung unterhalb einer vorgeschriebenen Schwelle zu halten. Anders ausgedrückt ist die Kalibriereinrichtung dazu ausgeführt, die Sendeeinrichtung derart anzusteuern, dass sie keine oder nur sehr geringfügig Messstrahlung aussendet, während die Modulatoreinrichtung aktiv ist. Das während einer Kalibrierungsmessung empfangene zweite Signal, welches lediglich Hintergrundstrahlung enthält, wird dazu verwendet, einen systematischen Messfehler bei der Entfernungsmessung herauszurechnen.

Gemäß einem Ausführungsbeispiel der Erfindung ist die Kalibriereinrichtung ausgeführt, bei der Kalibration der Messvorrichtung ein Übersprechen zwischen der Empfangseinrichtung und der Modulatoreinrichtung zu berücksichtigen. Ein Übersprechen kann dabei eine unerwünschte gegenseitige Beeinflussung von eigentlich unabhängigen Signalkanälen sein. Das Übersprechen kann beispielsweise induktiv oder kapazitiv sein.

Gemäß einem Ausführungsbeispiel der Erfindung weist das zweite Signal bei einer Kalibrierungsmessung lediglich optische Hintergrundstrahlung auf. Bei einer Entfernungsmessung dagegen weist das zweite Signal sowohl Hintergrundstrahlung als auch vom Objekt zurücklaufende Messstrahlung auf. Die Hintergrundstrahlung kann dabei beispielsweise eine gleichverteilte optische Strahlung sein. Im Gegensatz zur Messstrahlung ist die Hintergrundstrahlung nicht moduliert. Alternativ kann die Hintergrundstrahlung als Strahlung verstanden werden, die nicht notwendigerweise nicht moduliert ist, jedoch nicht mit dem ersten Signal korrelierte Strahlung ist.

Gemäß einem weiteren Ausführungsbeispiel der Erfindung kann die Empfangseinrichtung integral mit der Auswerteeinrichtung ausgeführt werden. Integral kann dabei bedeuten, dass die Empfangseinrichtung einstückig, d.h. in einem Bauteil mit der Auswerteeinrichtung ausgeführt ist. Beispielsweise können sowohl die Empfangseinrichtung als auch die Auswerteeinrichtung in einem Chip realisiert sein. Bei einer derartigen Ausgestaltung der Messvorrichtung ist die beschriebene Kalibrierung besonders vorteilhaft, da bei Integration der Empfangseinrichtung in die Auswerteeinrichtung der Effekt des Übersprechens besonders ausgeprägt sein kann.

Ferner können alle Einrichtungen beliebig miteinander kombiniert werden. Z.B. kann die Empfangseinrichtung einstückig bzw. integral mit der Auswerteeinrichtung ausgeführt sein. Ferner können die Empfangseinrichtung, die Auswerteeinrichtung und die Kalibriereinrichtung zu einer Einheit zusammengefasst sein. Alle genannten Einrichtungen, sowie auch die Sendeeinrichtung können auf einem Chip integriert sein.

Gemäß einem weiteren Ausführungsbeispiel der Erfindung weist die Empfangseinrichtung mindestens eine Avalanche Photo Diode (APD) oder mindestens eine Single Photo Avalanche Diode (SPAD) auf. Insbesondere bei einer SPAD basierten Entfernungsmessung kann die Auswerteeinrichtung und die Empfangseinrichtung Seite an Seite im gleichen Chip integriert sein.

Gemäß einem weiteren Ausführungsbeispiel der Erfindung ist die Sendeeinrichtung als Laser, insbesondere als Laserdiode ausgeführt. Beispielsweise kann eine rote Laserdiode mit einer Wellenlänge von 635 bzw. 650 nm verwendet werden. Dabei kann die Kalibriereinrichtung ausgeführt sein, den Laser während eines Kalibriervorgangs unterhalb einer Laserschwelle zu betreiben. D.h. es wird keine Messstrahlung emittiert.

Gemäß einem zweiten Aspekt der Erfindung wird ein Verfahren zum Kalibrieren einer oben beschriebenen Messvorrichtung beschrieben. Das Verfahren weist die folgenden Schritte auf: Betreiben einer Sendeeinrichtung zum Aussenden eines ersten Signals mit einer Leistung, die unterhalb eines vorgebbaren Leistungsschwellenwerts liegt; Betreiben einer Modulatoreinrichtung, insbesondere mit voller Leistungszufuhr zum Modulieren des ersten Signals der Sendeeinrichtung; Detektieren eines zweiten Signals mittels einer Empfangseinrichtung und Kalibrieren der Messvorrichtung mittels einer Kalibriereinrichtung, basierend auf dem zweiten Signal.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
- Fig. 1: zeigt ein Blockschaltbild einer Messvorrichtung gemäß einem Ausführungsbeispiel der Erfindung
- Fig. 2: zeigt einen Teil einer Messvorrichtung gemäß einem weiteren Ausführungsbeispiel der Erfindung
- Fig. 3: zeigt eine graphische Darstellung von theoretischen und gemessenen Abtastwerten des zweiten Signals bei Belichtung mit unmoduliertem Hintergrundlicht und bei eingeschalteter Sende- und Modulatoreinrichtung
- Fig. 4: zeigt eine graphische Darstellung von gemessenen Abtastwerten bei Belichtung mit unmoduliertem Hintergrundlicht und bei eingeschalteter Sendeeinrichtung und ausgeschalteter Modulatoreinrichtung
- Fig. 5: zeigt eine graphische Darstellung von gemessenen Abtastwerten bei Belichtung mit unmoduliertem Hintergrundlicht und bei ausgeschalteter Sendeeinrichtung und eingeschalteter Modulatoreinrichtung
- Fig. 6: zeigt eine graphische Darstellung von gemessenen Abtastwerten nach einer Kalibrierung mittels der Kalibriereinrichtung
- Fig. 7: zeigt Kennlinien einer Laserdiode bei unterschiedlichen Temperaturen

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

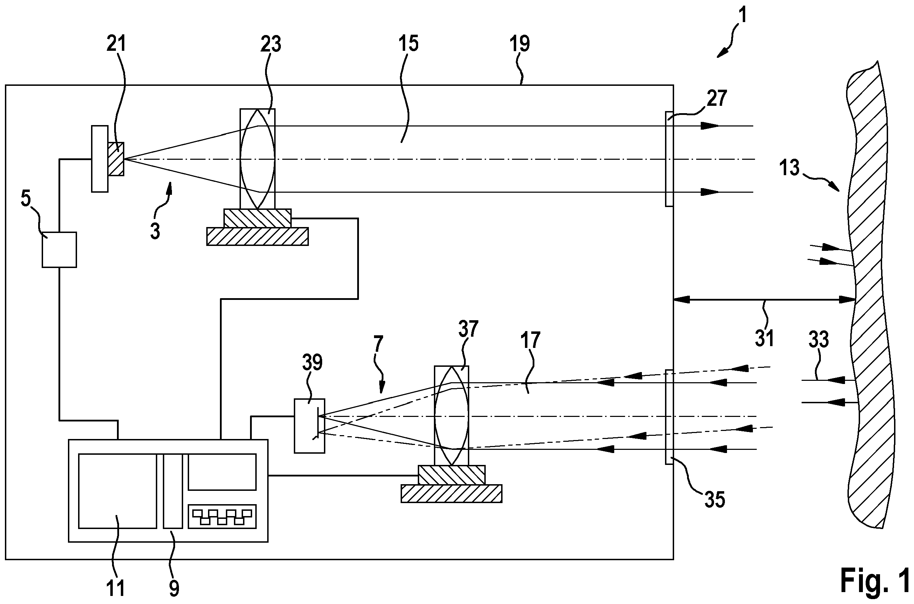

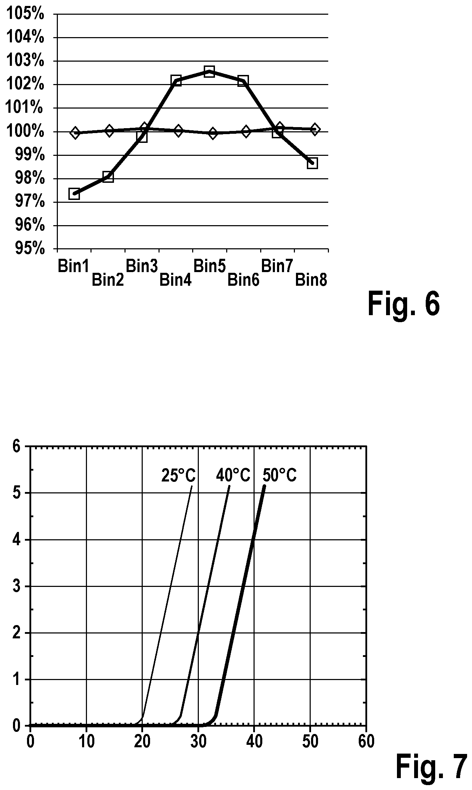

In Fig. 1 ist ein Querschnitt durch eine Messvorrichtung 1 dargestellt. Die Messvorrichtung 1 kann dabei ein handgehaltenes Entfernungsmessgerät sein. Die Messvorrichtung 1 kann ein Gehäuse 19 aufweisen, in dem eine Sendeeinrichtung 3, eine Modulatoreinrichtung 5, eine Empfangseinrichtung 7, eine Auswerteeinrichtung 9 und eine Kalibriereinrichtung 11 vorgesehen sind. Die Sendeeinrichtung 3 ist zum Aussenden eines ersten Signals 15 auf ein Zielobjekt 13 zu ausgeführt. Hierzu kann die Sendeeinrichtung 3 eine Lichtquelle 21 wie z.B. eine Halbleiterlaserdiode und ein Objektiv 23 aufweisen. Die Laserdiode kann dabei beispielsweise eine temperaturabhängige Kennlinie wie in Fig. 7 gezeigt aufweisen. In Fig. 7 ist dabei auf der X-Achse ein Strom in mA und auf der Y-Achse eine Leistung in mW aufgetragen. Die rechte Kurve entspricht einer Kennlinie bei 50°C, die mittlere bei 40°C und die linke bei 25°C.

Der Laser bzw. die Laserdiode wird über einen regelbaren DC-Strom eingeschaltet bzw. in der Leistung geregelt. Die Schwelle, ab welcher der Laser Licht emittiert, liegt beispielsweise bei 25 mA. Der Laser wird z.B. bei einer Entfernungsmessung mit einem DC-Strom von 30 mA betrieben. Die Laserleistung ist dabei z.B. bei einer Laserklasse II auf 1 mW mittlere Leistung beschränkt. Der Modulationsstrom bei eingeschalteter Modulatoreinrichtung 5 liegt z.B. bei 10 oder bei 5 mA.

Das erste Signal 15, auch als Messstrahlung bezeichnet, kann in seiner Amplitude oder Frequenz und insbesondere in seiner Intensität durch eine Modulatoreinrichtung 5 zeitlich moduliert werden. Während einer Entfernungsmessung kann das erste Signal 15 die Messvorrichtung 1 durch ein optisches Fenster 27 verlassen. Nach Verlassen der Messvorrichtung 1 wird das erste Signal 15 an dem in einer Entfernung 31 von der Messvorrichtung 1 befindlichen Zielobjekt 13 gestreut bzw. reflektiert. Die reflektierte Strahlung 33 tritt durch ein weiteres optisches Fenster 35 in die Messvorrichtung 1 ein und wird dort zusammen mit unmodulierter Hintergrundstrahlung als zweites Signal 17 von einer Empfangseinrichtung 7 detektiert. Die Empfangsvorrichtung 7 kann hierbei eine Empfangsoptik 37 und einen Empfangsdetektor 39 aufweisen. Von der Empfangseinrichtung 7 wird das zweite Signal 17 an die Auswerteeinrichtung 9 übermittelt. In der Auswerteeinrichtung 9 wird die Entfernung 31 des Zielobjekts 13 von der Messvorrichtung 1 mit Hilfe des Phasenlaufzeitverfahrens ermittelt.

Besonders bei großen Entfernungen bzw. starkem Hintergrundlicht können die Messergebnisse der Entfernungsmessung auf Grund eines ungünstigen Signal-Rausch-Verhältnisses verfälscht sein. Daher kann die erfindungsgemäße Messvorrichtung 1 eine Kalibrierungsmessung zur Verbesserung der Zuverlässigkeit des Messergebnisses durchführen. Bei der Kalibrierungsmessung kann eine z.B. in der Auswerteeinrichtung 9 vorgesehene Kalibrierungseinrichtung die Sendeeinrichtung 3 derart ansteuern, dass sie unterhalb eines Leistungsschwellenwerts betrieben wird. D.h., es wird praktisch kein detektierbares erstes Signal 15 während der Kaibrierungsmessung ausgesendet. Beispielsweise läuft hierbei die Laserdiode unterhalb einer Laserschwelle. Dabei ist die Kalibriereinrichtung 11 ausgeführt, die Modulatoreinrichtung 5 während des Kalibriereingangs einzuschalten. Auf diese Weise erreicht lediglich unmodulierte Hintergrundstrahlung die Empfangseinrichtung 7, deren Detektion bereits durch das Übersprechen, welches durch den Betrieb der Modulatoreinrichtung 5 verursacht wird, beeinflusst ist. Das Übersprechen kann dabei zwischen der Modulatoreinrichtung 5 und der Empfangseinrichtung 7 und/oder zwischen der Modulatoreinrichtung 5 und der Auswerteeinrichtung 9 stattfinden. Anhand des unter diesen Bedingungen detektierten zweiten Signals kann ein durch Übersprechen bedingter systematischer Fehler ermittelt und bei einer anschließenden Entfernungsmessung berücksichtigt werden. Dies kann die Messgenauigkeit der Entfernung 31 erheblich steigern.

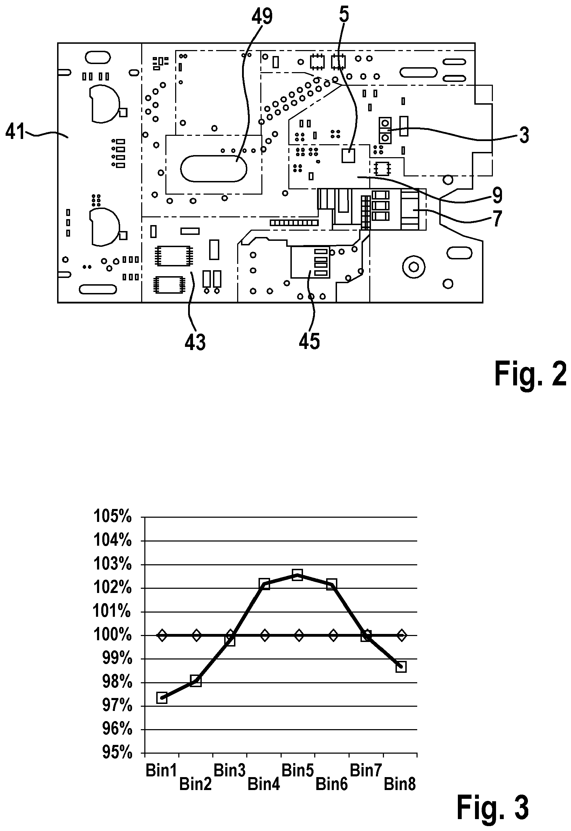

In Fig. 2 ist ein weiteres Ausführungsbeispiel einer Messvorrichtung 1 dargestellt. Dabei zeigt Fig. 2 eine Platine, auf der eine Sendeeinrichtung 3 in Form einer Laserdiode mit einem Treiber und einem entsprechenden Netzwerk angeordnet ist. Ferner ist auf der Platine ein 8 MHz Oszillator, ein µ-Controller, eine Energiequelle 41, ein Hochspannungsgenerator 43 und ein analoger Niederfrequenzpfad 45 angeordnet. Des Weiteren weist die Platine eine Empfangseinrichtung 7 auf, die als APD oder SPAD mit einem entsprechenden Netzwerk ausgeführt ist. Ferner ist eine Auswerteeinrichtung 9 an der Platine vorgesehen, die als eine ASIC ausgeführt ist, die zur Zeitmessung und/oder Modulation der Sendeeinrichtung 3 und/oder der Empfängereinrichtung 7 ausgeführt ist. In der Auswerteeinrichtung 9 ist eine Modulatoreinrichtung 5 vorgesehen.

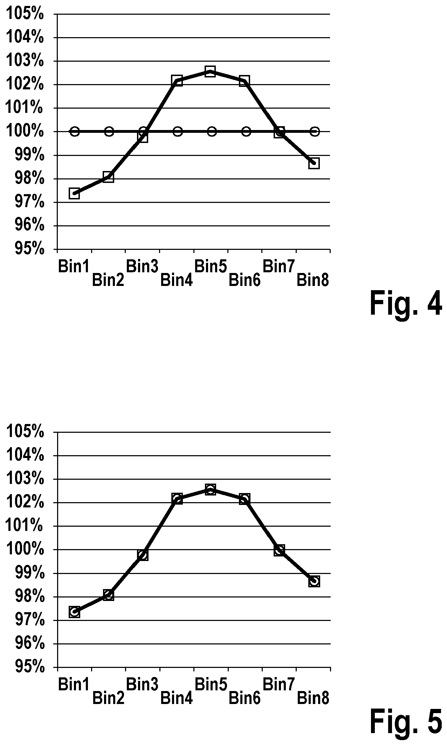

Anhand der Fig. 3 bis 6 wird die Auswirkung des Übersprechens durch den Betrieb der Modulatoreinrichtung 5 detaillierter diskutiert. Dabei sind in den Fig. 3 bis 6 jeweils auf der X-Achse acht Abtastfenster, auch als Bins bezeichnet dargestellt. Die acht Abtastfenster entsprechen einer Abtastperiode, und aus jedem Abtastfenster wird ein Abtastwert, ein sogenannter Sample Value, gewonnen. Auf der Y-Achse ist die normierte Intensität des detektierten zweiten Signals in Prozent, bezogen auf dessen Mittelwert über der Modulationsperiode, dargestellt. Zur Ermittlung der Werte in den Fig. 3 und 4 wurden dabei herkömmliche Geräte verwendet, bei denen vom Zielobjekt 13 reflektierte Strahlung 33 mechanisch blockiert werden kann, um den Effekt des Übersprechens zu verdeutlichen. Bei der erfindungsgemäßen Messvorrichtung 1 ist jedoch kein mechanisches Element zum Kalibrieren notwendig.

Fig. 3 zeigt das Problem des Übersprechens zwischen einem Sende- und Empfangspfad. Im dargestellten Beispiel werden die Messwerte bei eingeschalteter Modulatoreinrichtung 5 im Sendepfad und bei Betrieb der Laserdiode oberhalb der Laserschwelle ermittelt. Dabei wird die vom Zielobjekt 13 reflektierte Strahlung 33 empfangsseitig blockiert, so dass die Empfangseinrichtung 7 lediglich mit konstantem unmoduliertem Hintergrundlicht beleuchtet wird. Das von der Empfangseinrichtung 7 empfangene zweite Signal 17 wird periodisch synchron mit der Modulationsfrequenz abgetastet. Unter diesen Bedingungen ergibt sich die mit rechteckigen Messpunkten dargestellte, im Wesentlichen sinusförmige Kurve. Die Sinusform über eine Detektionsperiode ist durch ein Übersprechen zwischen Sende- und Empfangspfad bedingt. Dabei beeinflusst das Übersprechen beispielsweise die Empfindlichkeit der Empfangsvorrichtung und/oder die Breite der Abtastfenster.

Die mit Rauten dargestellte zur X-Achse parallele Kurve entspricht theoretischen Abtastwerten eines idealen Systems ohne Übersprechen. Im idealen System werden bei allen Abtastfenstern gleiche Abtastwerte detektiert.

Um den Fehler durch Übersprechen korrigieren zu können, muss ein Übersprechvektor, der den Messwerten in Fig. 3 entspricht, bekannt sein. In einem z.B. handgehaltenen Laserentfernungsmessgerät ist eine Ermittlung des Übersprechvektors nicht ohne weiteres möglich. Eine einmalige Kalibrierung in der Fertigung wäre möglich. Jedoch kann sich über Temperatur-, Prozess- und Spannungsschwankungen, sowie durch Alterung das Übersprechen in Amplitude und Phase ändern. Daher könnte es nötig sein, eine Kalibrierungsmessung vor jeder Entfernungsmessung durchzuführen. Um zu verhindert, dass Signallicht auf den Detektor gelangt, müsste beispielsweise ein mechanischer Shutter den Strahlengang unterbrechen. Ein solches Element würde jedoch die Abmessungen des Geräts vergrößern und zusätzliche Kosten verursachen. Daher ist eine Kalibrierungsmessung bei ausgeschaltetem Laser bzw. Betrieb des Lasers unterhalb der Laserschwelle von Vorteil.

Fig. 4 zeigt gemessene Abtastwerte des zweiten Signals bei Belichtung mit unmoduliertem Hintergrundlicht bei ausgeschalteter Modulatoreinrichtung 5 und bei Betrieb der Sendeeinrichtung 3 unterhalb der Laserschwelle, d.h., Laser DC off. Die entsprechenden Werte sind in der zur X-Achse parallelen Kurve mit kreisförmig dargestellten Messwerten gezeigt. Zum Vergleich ist die sinusförmige Messkurve bei eingeschalteter Modulatoreinrichtung 5 im Sendepfad und bei Betrieb der Sendeeinrichtung 3 oberhalb der Laserschwelle, wie bereits aus Fig. 3 bekannt, dargestellt.

Aus Fig. 4 ist ersichtlich, dass bei ausgeschalteter Modulatoreinrichtung 5 die Messwerte fast den idealen theoretischen Werten ohne Übersprechen entsprechen. Daraus kann gefolgert werden, dass das Übersprechen vorwiegend von der Modulatoreinrichtung 5 verursacht wird. Somit muss die Modulatoreinrichtung 5 für die Bestimmung des Übersprechvektors eingeschaltet sein.

Fig. 5 zeigt nun die Abtastwerte des Empfangssignals bei unmoduliertem Hintergrundlicht bei eingeschalteter Modulatoreinrichtung 5 und bei Betrieb der Sendeeinrichtung 3 unterhalb eines vorgegebenen Leistungsschwellenwerts. Ferner ist in Fig. 5 die bereits aus Fig. 3 und Fig. 4 bekannte Kurve von Abtastwerten bei eingeschalteter Modulatoreinrichtung 5 und bei Betrieb der Sendeeinrichtung 3 oberhalb der Laserschwelle dargestellt. Beide Kurven liegen übereinander. Daraus kann gefolgert werden, dass der Übersprechvektor nahezu unabhängig vom DC-Arbeitspunkt der Laserdiode ist.

In Fig. 6 ist erneut die aus Fig. 3, 4 und 5 bekannte Messkurve dargestellt, die sinusförmig ist und bei eingeschalteter Modulatoreinrichtung 5 und eingeschalteter Sendeeinrichtung aufgenommen wurde. Ferner ist in Fig. 6 eine bereits kalibrierte Messkurve dargestellt, die nahezu parallel zur X-Achse verläuft und fast der theoretischen Kurve aus Fig. 3 entspricht. Dabei werden die gemessenen Abtastwerte einer Entfernungsmessung eines jeden Bins (Laser DC an, Modulatoreinrichtung an) durch den Abtastwert der Kalibrierungsmessung eines jeden Bins (Laser DC aus, Modulatoreinrichtung an) geteilt. Der bei einer Entfernungsmessung aufgenommene Wert von Bin 1 wird dabei durch den bei einer Kalibiermessung aufgenommenen Wert von Bin 1 geteilt. Gleiches gilt für die Werte der weiteren Bins analog.

## Patentansprüche

1. Messvorrichtung (1) zur optischen Entfernungsmessung, die Messvorrichtung (1) aufweisend
• eine Sendeeinrichtung (3) zum Aussenden eines ersten Signals (15) auf ein Objekt (13) zu;
• eine Modulatoreinrichtung (5) zum Modulieren des ersten Signals (15);
• eine Empfangseinrichtung (7) zum Detektieren eines zweiten Signals (17);
• eine Auswerteeinrichtung (9) zum Empfangen und Auswerten des zweiten Signals (17);
**dadurch gekennzeichnet, dass** die Messvorrichtung (1) ferner eine Kalibriereinrichtung (11) aufweist, die ausgeführt ist, die Modulatoreinrichtung (5) anzusteuern, eine Modulation der Sendeeinrichtung (3) einzuleiten, gleichzeitig eine DC-Versorgung der Sendeeinrichtung (3) unterhalb eines vorgebbaren Leistungsschwellwerts zu betreiben sowie bei eingeschalteter Modulatoreinrichtung (5) und bei unterhalb eines vorgebbaren Leistungsschwellenwerts betriebener Sendeeinrichtung (3) die Messvorrichtung (1) durch Ermitteln eines systematischen Messfehlers aus einem empfangenen zweiten Signal (17) zu kalibrieren.

2. Messvorrichtung (1) gemäß Anspruch 1,
wobei die Kalibriereinrichtung (11) ausgeführt ist, beim Kalibrieren der Messvorrichtung (1) ein Übersprechen zwischen der Empfangseinrichtung (7) und der Modulatoreinrichtung (5) und/oder ein Übersprechen zwischen der Auswerteeinrichtung (9) und der Modulatoreinrichtung (5) zu berücksichtigen.

3. Messvorrichtung (1) gemäß einem der Ansprüche 1 und 2,
wobei das zweite Signal (17) beim Kalibrieren optische Hintergrundstrahlung aufweist;
wobei das zweite Signal (17) bei einer Entfernungsmessung optische Hintergrundstrahlung und vom Objekt (13) zurücklaufende optische Strahlung aufweist.

4. Messvorrichtung (1) gemäß einem der Ansprüche 1 bis 3,
wobei die Empfangseinrichtung (7) integral mit der Auswerteeinrichtung (9) ausgeführt ist.

5. Messvorrichtung (1) gemäß einem der Ansprüche 1 bis 4,
wobei die Empfangseinrichtung (7) eine Avalanche Photo Diode oder eine Single Photon Avalanche Diode aufweist.

6. Messvorrichtung (1) gemäß einem der Ansprüche 1 bis 5,
wobei die Sendeeinrichtung (3) als Laser ausgeführt ist;
wobei der Laser beim Kalibrieren unterhalb einer Laserschwelle betrieben wird.

7. Messvorrichtung (1) gemäß einem der Ansprüche 1 bis 6,
wobei die Kalibriereinrichtung (11) ausgeführt ist, die Messvorrichtung (1) zu kalibrieren, indem ein von der Empfangseinrichtung (7) während einer Entfernungsmessung detektiertes zweites Signal (17) durch ein während einer Kalibrierungsmessung detektiertes zweites Signal (17) geteilt wird.

8. Verfahren zum Kalibrieren einer Messvorrichtung (1) gemäß einem der Ansprüche 1 bis 7, das Verfahren aufweisend die folgenden Schritte
• Betreiben einer Sendeeinrichtung (3) zum Aussenden eines ersten Signals (15) mit einer Leistung, die unterhalb eines vorgebbaren Leistungsschwellenwerts liegt;
• Betreiben einer Modulatoreinrichtung (5) zum Modulieren des ersten Signals (15) der Sendeeinrichtung (3);
• Detektieren eines zweiten Signals (17) mittels einer Empfangseinrichtung (7); und
• Kalibrieren der Messvorrichtung (1) bei eingeschalteter Modulatoreinrichtung und bei unterhalb des Leistungsschwellwerts betriebener Sendeeinrichtung mittels einer Kalibriereinrichtung (11) basierend auf dem zweiten Signal (17), indem aus dem zweiten Signal ein systematischer Messfehler ermittelt wird, der bei einer Entfernungsmessung herausgerechnet wird

## Claims

1. Measurement device (1) for optical distance measurement, the measurement device (1) having
• an emission device (3) for emitting a first signal (15) toward an object (13);
• a modulator device (5) for modulating the first signal (15);
• a reception device (7) for detecting a second signal (17);
• an analysis device (9) for receiving and analyzing the second signal (17);
**characterized in that** the measurement device (1) furthermore has a calibration device (11), which is embodied to activate the modulator device (5), to initiate a modulation of the emission device (3), to simultaneously operate a DC supply of the emission device (3) below a pre-definable power threshold value and also to calibrate the measurement device (1), with modulator device (5) turned on and with emission device (3) operated below a pre-definable power threshold value, by determining a systematic measurement error from a received second signal (17).

2. Measurement device (1) according to Claim 1,
wherein the calibration device (11) is embodied, during the calibration of the measurement device (1), to take into account a crosstalk between the reception device (7) and the modulator device (5) and/or a crosstalk between the analysis device (9) and the modulator device (5).

3. Measurement device (1) according to any one of Claims 1 and 2,
wherein the second signal (17) during the calibration has optical background radiation; wherein the second signal (17) during a distance measurement has optical background radiation and optical radiation returning from the object (13).

4. Measurement device (1) according to any one of Claims 1 to 3,
wherein the reception device (7) is embodied integrally with the analysis device (9).

5. Measurement device (1) according to any one of Claims 1 to 4,
wherein the reception device (7) has an avalanche photodiode or a single photon avalanche diode.

6. Measurement device (1) according to any one of Claims 1 to 5,
wherein the emission device (3) is embodied as a laser;
wherein the laser is operated during calibration below a laser threshold.

7. Measurement device (1) according to any one of Claims 1 to 6,
wherein the calibration device (11) is embodied to calibrate the measurement device (1), in that a second signal (17) detected by the reception device (7) during a distance measurement is divided by a second signal (17) detected during a calibration measurement.

8. Method for calibrating a measurement device (1) according to any one of Claims 1 to 7, the method having the following steps:
µ operating an emission device (3) to emit a first signal (15) using a power which lies below a pre-definable power threshold value;
• operating a modulator device (5) for modulating the first signal (15) of the emission device (3) ;
• detecting a second signal (17) by means of a reception device (7); and
• calibrating the measurement device (1), with modulator device turned on and with emission device operated below the power threshold value, by means of a calibration device (11) based on the second signal (17), in that a systematic measurement error is determined from the second signal, which systematic measurement error is calculated out during a distance measurement.

## Revendications

1. Système de mesure (1) servant à la télémétrie optique, le système de mesure (1) possédant
• un dispositif d'émission (3) destiné à émettre un premier signal (15) vers un objet (13) ;
• un dispositif modulateur (5) destiné à moduler le premier signal (15) ;
• un dispositif de réception (7) destiné à détecter un deuxième signal (7) ;
• un dispositif d'interprétation (9) destiné à recevoir et à interpréter le deuxième signal (17) ; **caractérisé en ce que** le système de mesure (1) possède en outre un dispositif d'étalonnage (11) qui est conçu pour piloter le dispositif modulateur (5) afin d'initier une modulation du dispositif d'émission (3), simultanément faire fonctionner une alimentation CC du dispositif d'émission (3) au-dessous d'une valeur de seuil de puissance qui peut être prédéfinie et aussi, lorsque le dispositif modulateur (5) est en marche et avec le dispositif d'émission (3) qui fonctionne au-dessous d'une valeur de seuil de puissance qui peut être prédéfinie, étalonner le système de mesure (1) en déterminant une erreur de mesure systématique à partir d'un deuxième signal (17) reçu.

2. Système de mesure (1) selon la revendication 1, le dispositif d'étalonnage (11) étant conçu pour, lors de l'étalonnage du système de mesure (1), tenir compte d'une diaphonie entre le dispositif de réception (7) et le dispositif modulateur (5) et/ou une diaphonie entre le dispositif d'interprétation (9) et le dispositif modulateur (5).

3. Système de mesure (1) selon l'une des revendications 1 et 2, le deuxième signal (17) possédant un fond naturel de rayonnement optique lors de l'étalonnage ;
le deuxième signal (17) possédant, lors d'une mesure de distance, un fond naturel de rayonnement optique et le rayonnement optique renvoyé par l'objet (13).

4. Système de mesure (1) selon l'une des revendications 1 à 3, le dispositif de réception (7) étant réalisé d'un seul tenant avec le dispositif d'interprétation (9).

5. Système de mesure (1) selon l'une des revendications 1 à 4, le dispositif de réception (7) possédant une photodiode à avalanche ou une diode à avalanche à photon unique.

6. Système de mesure (1) selon l'une des revendications 1 à 5, le dispositif d'émission (3) étant réalisé sous la forme d'un laser, le laser fonctionnant au-dessous d'un seuil de laser lors de l'étalonnage.

7. Système de mesure (1) selon l'une des revendications 1 à 6, le dispositif d'étalonnage (11) étant conçu pour étalonner le système de mesure (1) en divisant un deuxième signal (17) détecté par le dispositif de réception (7) pendant une mesure de distance par un deuxième signal (17) détecté pendant une mesure d'étalonnage.

8. Procédé d'étalonnage d'un système de mesure (1) selon l'une des revendications 1 à 7, le procédé comprenant les étapes suivantes
• actionnement d'un dispositif d'émission (3) pour émettre un premier signal (15) avec une puissance qui est inférieure à une valeur de seuil de puissance pouvant être prédéfinie ;
• actionnement d'un dispositif modulateur (5) pour moduler le premier signal (15) du dispositif d'émission (3) ;
• détection d'un deuxième signal (7) au moyen du dispositif d'émission (3) ; et
• étalonnage du système de mesure (1) avec le dispositif modulateur en marche et avec le dispositif d'émission fonctionnant au-dessous de la valeur de seuil de puissance au moyen d'un dispositif d'étalonnage (11) en se basant sur le deuxième signal (17), par détermination d'une erreur de mesure systématique à partir du deuxième signal, laquelle est calculée lors d'une mesure de distance.
